# FASCICULE DE BREVET EUROPEEN

(11) **EP 2 724 944 B1**
(45) Date de publication et mention de la délivrance du brevet: **10.04.2019**
(21) Numéro de dépôt: 13189070.9
(22) Date de dépôt: 17.10.2013
(51) Int. Cl.: B64G 1/22, F16C 11/12, E04H 12/08, E04H 12/18, E05D 1/02, B64G 1/44, B25J 17/02

(54) **Système de motorisation pour articulation à moyens d'enroulement croisés avec roulement fiabilisé**
Motorisierungssystem für Gelenk mit gekreuzten Aufrollmitteln mit zuverlässigem Rollverhalten
Motorisation system for articulation having crossed winding means with reliable bearing

(30) Priorité: 26.10.2012 FR 1202860
(43) Date de publication de la demande: 30.04.2014
(73) Titulaire: Thales, 92400 Courbevoie (FR)
(72) Inventeur: Baudasse, Yannick, 06150 Cannes-La-Bocca (FR); Vezain, Stéphane, 06150 Cannes-La-Bocca (FR); Stanek, Didier, 06150 Cannes-La-Bocca (FR)
(74) Mandataire: Esselin, Sophie

(56) Documents cités:
- WO-A1-83/02795
- FR-A1- 2 795 465
- FR-A1- 2 902 763
- FR-A1- 2 968 234
- US-A- 4 073 201
- US-A- 4 558 911

## Description

La présente invention concerne les systèmes de motorisation d'éléments. Elle s'applique notamment au domaine des mécanismes de déploiement d'appendices spatiaux, tels que des antennes ou des générateurs solaires par exemple.

Dans les systèmes de motorisation précités, des éléments, par exemple des ferrures, sont typiquement mis en mouvement les uns par rapport aux autres autour d'articulations. Ces systèmes comprennent ainsi des lignes d'articulations utilisant généralement des composants de motorisation du type ressorts de torsion, ressorts spiraux ou joints de Carpentier, permettant de lutter contre les couples résistants et de garantir les marges nécessaires en termes de couples générés en vue d'assurer le déploiement complet des appendices.

Dans ce contexte, les composants de motorisation connus présentent un couple de motorisation évolutif ou variable impliquant une sur-motorisation qui occasionne des chocs en fin de déploiement.

Ces chocs peuvent être importants et générer des dégâts sur les appendices spatiaux en fin de déploiement, ainsi que des couples parasites néfastes au pilotage de l'engin spatial. Pour pallier ce problème, les structures déployables peuvent être dimensionnées et renforcées de manière à pouvoir résister aux chocs de fin de course générés lors de leur déploiement, mais cette solution n'est pas satisfaisante et entraîne notamment un poids accru pour la structure complète.

Certains développements ont mené à la mise au point de mécanismes de déploiement à couple résistif quasi-nul. De tels mécanismes, tels que la ligne d'articulations décrite dans la demande de brevet FR 2635077, présentent l'avantage de ne nécessiter que peu de puissance de motorisation et engendrent des chocs de fin de course minimisés. D'autres mécanismes sont le fruit d'améliorations apportées au mécanisme précédent, en termes de masse et de volume notamment. Un tel mécanisme de déploiement est divulgué dans la demande de brevet FR 06 05653 (N° de publication: FR 2 902 763), qui est considéré comme l'art antérieur le plus proche et décrit les caractéristiques du préambule de la revendication 1.
Néanmoins, ce mécanisme ne prévoit pas de solution pour réduire les risques de coincement en cas de présence de corps étrangers, et favoriser l'évacuation de corps étrangers.

Les mécanismes connus, tels que ceux décrits dans les demandes de brevets FR 2635077 et FR 0605653 précitées, ont une capacité angulaire de déploiement limitée à 180°. Par ailleurs, leur cinématique d'ensemble, du fait de leur structure, engendre des couples de motorisation très irréguliers. Enfin, la vitesse de déploiement des mécanismes de déploiement connus, comme déjà évoqué, entraînent une restitution d'énergie en fin de course, donc un choc, car ladite vitesse de déploiement n'est pas régulée.

Pour corriger ces inconvénients, il a été proposé un dispositif de motorisation à couple contrôlé, décrit dans la demande de brevet publiée sous la référence FR 2968234. Un tel dispositif permet de présenter un couple résistant quasi-nul, et se fonde sur l'utilisation de pistes flexibles de roulement déjà existantes dans le système, pour réaliser la motorisation. Une forme spécifique est donnée aux pistes flexibles de manière à permettre un excentrement du point de contact entre les pistes flexibles par rapport au point de croisement de moyens d'enroulement tels que des lames souples enroulées ou bien des câbles, formant un élément de liaison entre deux cylindres d'enroulement sensiblement parallèles formant ferrures avec les pistes flexibles, auxquels sont reliés différents composants du système. De la sorte, un couple dépendant de la distance entre le point de contact et le point de croisement précités provoque la rotation des pistes flexibles entre elles, et ainsi la rotation des ferrures entre elles. Par « point de croisement » entre les moyens d'enroulement formant élément de liaison, il est entendu de manière plus large l'axe sensiblement parallèle aux axes longitudinaux ou axes de révolution des ferrures, passant tout à la fois au travers des deux moyens d'enroulement.

Dans le dispositif précité, un problème peut se poser lorsque des corps étrangers viennent se loger entre les pistes flexibles de roulement, pouvant entraîner jusqu'à un coincement total de l'articulation. Les corps étrangers peuvent provenir de l'espace environnant le dispositif, ou bien du dispositif lui-même, les corps étrangers pouvant alors être des pièces du système accidentellement isolées, ou bien des résidus de matière provenant de phénomènes d'érosion de pièces, par exemple.

Un but de la présente invention est notamment de pallier les inconvénients précités. Ainsi, il est proposé par la présente invention un dispositif de motorisation comprenant au moins deux pistes flexibles de roulement, ces dernières étant judicieusement configurées de manière à réduire les risques de coincement en cas de présence de corps étrangers, et avantageusement de favoriser l'évacuation de corps étrangers.

Plus précisément, l'invention a pour objet un dispositif d'articulation à roulement comprenant deux cylindres d'enroulement sensiblement parallèles, des moyens d'enroulement formant élément de liaison de forme longitudinale, les moyens d'enroulement étant aptes à maintenir une distance prédéterminée entre les deux cylindres d'enroulement et étant enroulés autour des deux cylindres d'enroulement, et au moins deux pistes flexibles, une piste flexible étant fixée sur chaque cylindre d'enroulement, les pistes flexibles étant disposées en vis-à-vis et présentant un point de contact, un effort de précontrainte s'appliquant audit point de contact des pistes flexibles sous l'effet des moyens d'enroulement, au moins une piste flexible des au moins deux pistes flexibles comprenant au moins une fente réalisée sur au moins une partie de sa longueur, ladite fente délimitant une pluralité de sections de poutres flexibles de profils déterminés.

Dans un mode de réalisation de l'invention, ladite au moins une fente peut être réalisée sur toute la longueur de la piste flexible.

Dans un mode de réalisation de l'invention, ladite au moins une fente peut être réalisée sur une partie de la longueur de la piste flexible.

Dans un mode de réalisation de l'invention, une piste flexible peut comprendre une première pluralité de fentes réalisées sur toute la longueur de la piste flexible et une seconde pluralité de fentes réalisées sur une partie de la longueur de la piste flexible.

Dans un mode de réalisation de l'invention, lesdites sections de poutres peuvent être à section rectangulaire.

Dans un mode de réalisation de l'invention, lesdites sections de poutres peuvent être à section d'une forme parmi le groupe comprenant les formes ronde, ovale, trapézoïdale, carrée, losange, carrée ou rectangulaire à coins arrondis, forme de diabolo.

Dans un mode de réalisation de l'invention, les fentes peuvent être sensiblement parallèles aux bords latéraux d'une piste flexible.

Dans un mode de réalisation de l'invention, les fentes peuvent présenter un angle déterminé avec les bords latéraux d'une piste flexible.

La présente invention a également pour objet un système déployant pour satellite artificiel, comprenant au moins un premier appendice déployable, un second appendice déployable, et comprenant en outre un dispositif d'articulation à roulement selon l'un quelconque des modes de réalisation présentés, les appendices déployables étant fixés sur chaque ensemble formé par un cylindre d'enroulement et une piste flexible.

D'autres caractéristiques et avantages de l'invention apparaîtront à l'aide de la description qui suit faite en regard des dessins annexés qui représentent :
- la figure 1 : un schéma d'un système d'articulation à roulement à couple de motorisation de motorisation connu de l'état de la technique, dans des positions stockée et déployée ;
- la figure 2, un schéma illustrant de manière synoptique un système d'articulation à roulement en présence d'un corps étranger ;
- les figures 3A, 3B, 3C, des vues en perspectives illustrant différentes configurations de pistes flexibles alternatives, dans un système de motorisation selon différents exemples de réalisation de l'invention ;
- la figure 4, un schéma illustrant différents profils alternatifs de sections de poutres flexibles, selon différents exemples de réalisation de l'invention.

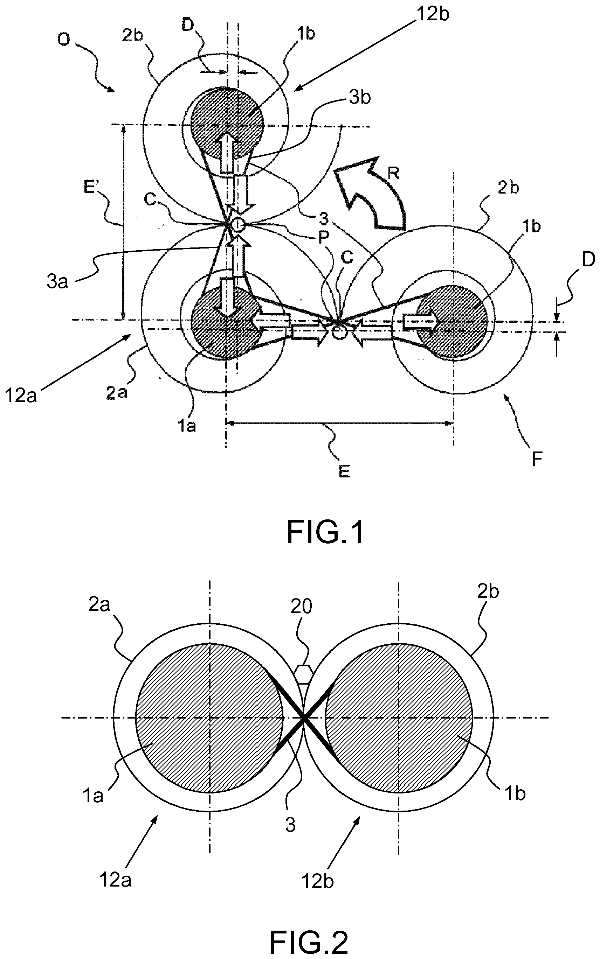

La figure 1 présente un schéma illustrant un système d'articulation à roulement à couple de motorisation tel que décrit dans la demande de brevet FR 2968234 précitée. Un système d'articulation à roulement à couple de motorisation comprend des cylindres d'enroulement 1a, 1b sensiblement parallèles et maintenus en position par des moyens d'enroulement 3 tels que des lames souples, ou par tout autre élément adapté, comme par exemple des câbles. Les moyens d'enroulement 3 sont enroulés en forme de huit autour des cylindres d'enroulement 1a, 1b ; pris séparément, chaque moyen d'enroulement comprend notamment une portion linéaire 3a ou 3b se croisant en un point de croisement C, chaque portion linéaire 3a, 3b étant prolongée par une portion des moyens d'enroulement s'enroulant autour de chacun des cylindres d'enroulement 1a, 1b. Les moyens d'enroulement se croisent au point de croisement C.

Des pistes flexibles 2a, 2b, sont respectivement connectées à chacun des cylindres d'enroulement 1a, 1b à section circulaire. Les pistes flexibles 2a, 2b sont disposées en vis-à-vis et en contact l'une de l'autre. Un ensemble comprenant un cylindre d'enroulement 1a, 1b et une piste flexible 2a, 2b associée forme une ferrure 12a, 12b. Les moyens d'enroulement 3 induisent un effort de précontrainte s'appliquant au point de contact P entre les pistes flexibles 2a, 2b. Du fait de la géométrie à base circulaire des cylindres d'enroulement 1a, 1b et des pistes flexibles, le point de contact P entre les pistes flexibles 2a, 2b et le point de croisement C des moyens d'enroulement 3 sont alignés sur un plan orthogonal au plan passant par les deux axes de révolution des deux cylindres d'enroulement 1a, 1b. Des appendices, tels que des générateurs solaires, peuvent être fixés sur chaque ensemble cylindre d'enroulement / piste flexible 1a-2a / 1b-2b.

Les pistes flexibles 2a, 2b peuvent être constituées de pistes flexibles en forme de spirale. Le profil des pistes flexibles 2a, 2b peut également être formé par plusieurs portions de spirales, et/ou par plusieurs portions de profil circulaire. La forme spécifique de spirale permet d'excentrer le point de contact P inter-pistes flexibles 2a, 2b par rapport au point de croisement C des moyens d'enroulement 3. Le point de contact P et le point de croisement C ne se trouvent pas sur le même axe parallèle aux axes de révolution des cylindres d'enroulement 1a, 1b. Cet excentrement d'une distance D, du point de contact P par rapport au point de croisement C, entraîne l'excentrement de l'effort de précontrainte induit par les moyens d'enroulement 3 et s'appliquant au point de contact P. De ce fait, un couple R est produit entre le point de contact P et le point de croisement C induisant la rotation des ferrures 12a, 12b comprenant les pistes flexibles 2a, 2b et les cylindres d'enroulement 1a, 1b. La rotation des ferrures 12a, 12b entre elles, du fait de la forme en spirale des pistes flexibles 2a, 2b, entraîne une variation de la déformation des pistes flexibles 2a, 2b et plus précisément de la flèche au point de contact, l'entraxe des cylindres d'enroulement 1a, 1b, étant quant à lui constant, avec une longueur E en position fermée F égalant une longueur E' en position ouverte O.

Le couple R peut être ajusté au moyen des choix effectués sur la forme de la spirale et sur les caractéristiques physiques des pistes flexibles 2a, 2b, en particulier leur élasticité et leur rigidité. Pour augmenter le couple R exercé sur les pistes flexibles 2a, 2b, il est possible d'augmenter le déport du point de contact P par rapport au point de croisement C en réalisant une spirale avec un angle d'ouverture important, ou d'augmenter l'effort exercé au point de contact P en réalisant une piste flexible plus raide. Pour augmenter l'effort exercé au point de contact C, il est encore possible d'augmenter la flèche des pistes flexibles 2a, 2b.

Pour générer un couple R constant pendant la phase de déploiement, une forme de spirale d'Archimède peut être préférée.

Le couple R de motorisation peut également être adapté afin de compenser certains couples de frottement variables introduits par des éléments externes à l'articulation. Il peut s'agir typiquement des torons de câbles électriques acheminant l'électricité entres deux panneaux de générateur solaire. Il est ainsi possible d'obtenir une marge de motorisation quasi-constante tout au long du déploiement. Le besoin en motorisation peut alors être ajusté au strict nécessaire

D'une manière plus générale, la présente invention peut s'appliquer à un système d'articulation à roulement comprenant au moins deux pistes flexibles, quelles que soient leurs formes, et quelle que soit par ailleurs la configuration des moyens d'enroulement. Ainsi l'exemple illustré par la figure 2 décrite ci-après comprend des pistes flexibles de forme circulaire, disposées autour de cylindres d'enroulement, et associées à des moyens d'enroulement.

La figure 2 décrit plus précisément, de manière synoptique, un dispositif d'articulation à roulement en présence d'un corps étranger.

Le dispositif d'articulation à roulement illustré par la figure 2 comprend deux cylindres d'enroulement 1a, 1b à l'instar de l'exemple plus spécifique décrit précédemment en référence à la figure 1, ainsi que des pistes flexibles 2a, 2b et des moyens de liaison 3.

Un corps étranger 20 peut venir se loger entre les pistes 2a, 2b, le corps étranger 20 pouvant alors lors du mouvement du dispositif de motorisation, être forcé à s'engager plus encore entre les pistes flexibles 2a, 2b, nuisant ainsi au bon fonctionnement du dispositif d'articulation en contribuant à un couple indu de résistance, voire conduisant à un endommagement des pistes 2a, 2b, ou même à un coincement total du dispositif d'articulation.

La présente invention permet de réduire de tels risques, en utilisant des pistes flexibles et en proposant que les pistes flexibles soient divisées de manière à répartir la pré-charge qui leur est appliquée. A cet effet, la présente invention propose que les pistes flexibles de roulement soient formées d'une pluralité de sections de poutres flexibles sur lesquelles la pré-charge peut être répartie.

Par exemple, au moins une partie de chaque piste flexible peut comprendre au moins une fente, réalisée sur tout ou partie de sa longueur, la fente permettant de délimiter plusieurs sections de poutres flexibles. Il est entendu ici par la longueur d'une piste flexible, la dimension suivant laquelle la piste flexible s'enroule autour d'un cylindre d'enroulement. Pour la suite, les bords latéraux d'une piste flexible peuvent se définir comme les bords de la piste flexible sensiblement parallèles à la longueur de la piste flexible, c'est-à-dire s'inscrivant globalement dans un plan perpendiculaire à l'axe longitudinal, ou de révolution, du cylindre d'enroulement autour duquel est disposée la piste flexible considérée.

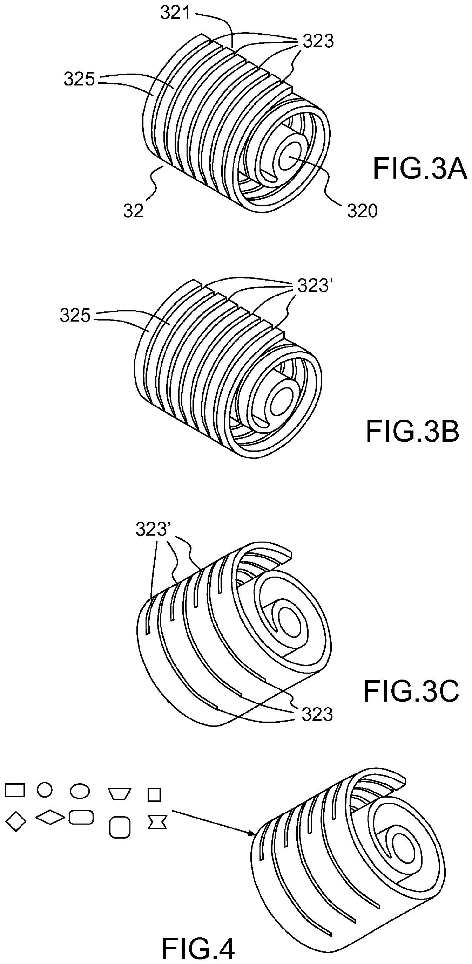

Les figures 3A à 3C sont des vues en perspectives illustrant différentes configurations de pistes flexibles alternatives, dans un système d'articulation à roulement selon différents exemples de réalisation de l'invention. Dans les exemples ainsi illustrés, une piste flexible 32 présente une forme de spirale, s'enroulant autour d'une partie centrale 320 formant un cylindre, ou bien étant disposée autour d'un cylindre d'enroulement non représenté sur les figures. Cet exemple n'est pas limitatif de la présente invention. La partie de la piste flexible 32, dans le sens de sa longueur telle que définie précédemment, située sensiblement au niveau de la partie centrale 320 peut être définie comme la partie proximale de la piste flexible 32, la piste flexible 32 s'étendant sur sa longueur jusqu'à une partie distale 321, terminée par un bord distal sensiblement perpendiculaire aux bords latéraux de la piste flexible 32.

En référence à la figure 3A, la piste flexible 320 peut comprendre une pluralité de fentes 323 réalisées dans le sens de la longueur de la piste flexible 320, sensiblement parallèles les unes aux autres, parallèles aux bords latéraux de la piste flexible 320, et réalisées sur toute la longueur de la piste flexible 320. Les fentes 323 délimitent une pluralité de sections de poutres 325.

En référence à la figure 3B, la piste flexible 320 peut par exemple, dans un mode de réalisation alternatif, comprendre une pluralité de fentes 323' réalisées dans le sens de la longueur de la piste flexible 320, sensiblement parallèles les unes aux autres, parallèles aux bords latéraux de la piste flexible 320, et réalisées sur une partie de la longueur de la piste flexible 320, par exemple s'étendant depuis une distance déterminée de la partie proximale de la piste flexible 32 en s'éloignant de celle-ci le long de la longueur de la piste flexible 32, jusqu'au bord distal de la piste flexible 32. Les fentes 323' délimitent une pluralité de sections de poutres 325.

En référence à la figure 3C, la piste flexible 320 peut par exemple, dans un mode de réalisation alternatif, comprendre une première pluralité de fentes 323' réalisées dans le sens de la longueur de la piste flexible 320, sensiblement parallèles les unes aux autres, parallèles aux bords latéraux de la piste flexible 320, et réalisées sur une partie de la longueur de la piste flexible 320, par exemple s'étendant depuis une distance déterminée de la partie proximale de la piste flexible 32 en s'éloignant de celle-ci le long de la longueur de la piste flexible 32, jusqu'au bord distal de la piste flexible 32, à l'instar des fentes dans le mode de réalisation décrit ci-dessus en référence à la figure 3B. Egalement, la piste flexible 320 peut comprendre, à l'instar du mode de réalisation décrit précédemment en référence à la figure 3A, une seconde pluralité de fentes 323 réalisées dans le sens de la longueur de la piste flexible 320, sensiblement parallèles les unes aux autres, parallèles aux bords latéraux de la piste flexible 320, et réalisées sur toute la longueur de la piste flexible 320. Les fentes 323 de la seconde pluralité de fentes, réalisées sur toute la longueur et les fentes 323' de la première pluralité de fentes, réalisées sur une partie de la longueur de la piste flexible 320, peuvent être alternées.

Les exemples présentés ci-dessus ne sont aucunement limitatifs de la présente invention, et il peut par exemple être envisagé que les fentes ne soient pas parallèles aux bords latéraux de la piste flexible. Les fentes peuvent par exemple former un angle déterminé avec les bords latéraux de la piste flexible, et ainsi présenter une forme hélicoïdale, favorisant l'évacuation de corps étrangers.

Avantageusement, ainsi que cela est illustré par la figure 4, basée sur un exemple de piste flexible tel que décrit précédemment en référence à la figure 3C, les sections de poutres formant une piste flexible peuvent présenter des sections de diverses formes. Les sections de poutres peuvent par exemple être à section rectangulaire, à l'instar des exemples illustrés par les figures 3A à 3C. Elles peuvent également être à section ronde ou ovale, à section trapézoïdale, à section carrée, à section losange régulier ou non régulier, à sections carrée ou rectangulaire à coins arrondis, à section en forme de diabolo, etc.

## Revendications

1. Dispositif d'articulation à roulement comprenant deux cylindres d'enroulement (1a, 1b) sensiblement parallèles, des moyens d'enroulement formant élément de liaison (3) de forme longitudinale, les moyens d'enroulement (3) étant aptes à maintenir une distance prédéterminée entre les deux cylindres d'enroulement (1a, 1b) et étant enroulés autour des deux cylindres d'enroulement (1a, 1b), et au moins deux pistes flexibles (2a,2b), une piste flexible (2a,2b) étant fixée sur chaque cylindre d'enroulement (1a, 1b), les pistes flexibles (2a,2b) étant disposées en vis-à-vis et présentant un point de contact (P), un effort de précontrainte s'appliquant audit point de contact (P) des pistes flexibles (2a,2b) sous l'effet des moyens d'enroulement (3), **caractérisé en ce qu'**au moins une piste flexible des au moins deux pistes flexibles (2a, 2b) comprend au moins une fente (323, 323') réalisée sur au moins une partie de sa longueur, ladite fente délimitant une pluralité de sections de poutres (325) flexibles de profils déterminés.

2. Dispositif d'articulation à roulement suivant la revendication 1, **caractérisé en ce que** ladite au moins une fente (323) est réalisée sur toute la longueur de la piste flexible (2a, 2b).

3. Dispositif d'articulation à roulement suivant la revendication 1, **caractérisé en ce que** ladite au moins une fente (323) est réalisée sur une partie de la longueur de la piste flexible (2a, 2b).

4. Dispositif d'articulation à roulement suivant la revendication 1, **caractérisé en ce qu'**une piste flexible des au moins deux pistes flexibles (2a, 2b) comprend une première pluralité de fentes (323) réalisées sur toute la longueur de la piste flexible des au moins deux pistes flexibles (2a, 2b) et une seconde pluralité de fentes (323') réalisées sur une partie de la longueur de la piste flexible des au moins deux pistes flexibles (2a, 2b).

5. Dispositif d'articulation à roulement suivant l'une quelconque des revendications précédentes, **caractérisé en ce que** lesdites sections de poutres (325) sont à section rectangulaire.

6. Dispositif d'articulation à roulement suivant l'une quelconque des revendications 1 à 4, **caractérisé en ce que** lesdites sections de poutres (325) sont à section d'une forme parmi le groupe comprenant les formes ronde, ovale, trapézoïdale, carrée, losange, carrée ou rectangulaire à coins arrondis, forme de diabolo.

7. Dispositif d'articulation à roulement suivant l'une quelconque des revendications précédentes, **caractérisé en ce que** les fentes (323, 323') sont sensiblement parallèles aux bords latéraux d'une piste flexible des au moins deux pistes flexibles (2a, 2b).

8. Dispositif d'articulation à roulement suivant l'une quelconque des revendications 1 à 6, **caractérisé en ce que** les fentes (323, 323') présentent un angle déterminé avec les bords latéraux d'une piste flexible des au moins deux pistes flexibles (2a, 2b).

9. Système déployant pour satellite artificiel, comprenant au moins un premier appendice déployable et un second appendice déployable, **caractérisé en ce qu'**il comprend en outre un dispositif d'articulation à roulement selon l'une quelconque des revendications précédentes, les appendices déployables étant fixés sur chaque ensemble formé par un cylindre d'enroulement (1a, 1b) et une piste flexible (2a, 2b).

## Patentansprüche

1. Gelenkvorrichtung mit Kugellager, welche zwei Aufrollzylinder (1a,1b) beinhaltet, welche im Wesentlichen parallel sind, Aufrollmittel, welche ein Verbindungselement (3) mit länglicher Form bilden, wobei die Aufrollmittel (3) in der Lage sind, einen vorbestimmten Abstand zwischen den beiden Aufrollzylindern (1a,1b) zu halten und um die beiden Aufrollzylinder (1a,1 b) aufgerollt sind, und mindestens zwei flexible Spuren (2a,2b), wobei eine flexible Spur (2a,2b) an jedem Aufrollzylinder (1a,1b) befestigt ist, wobei die flexiblen Spuren (2a,2b) einander zugewandt angeordnet sind und einen Kontaktpunkt (P) aufweisen, wobei eine Vorspannkraft auf den Kontaktpunkt (P) der flexiblen Spuren (2a,2b) unter der Einwirkung der Aufrollmittel (3) aufgebracht wird, **dadurch gekennzeichnet, dass** mindestens eine flexible Spur der mindestens zwei flexiblen Spuren (2a, 2b) mindestens einen Schlitz (323, 323') beinhaltet, welcher über mindestens einen Teil ihrer Länge praktiziert ist, wobei der Schlitz eine Vielzahl von flexiblen Balkenabschnitten (325) mit bestimmten Profilen abgrenzt.

2. Gelenkvorrichtung mit Kugellager nach Anspruch 1, **dadurch gekennzeichnet, dass** der mindestens eine Schlitz (323) über die gesamte Länge der flexiblen Spur (2a, 2b) praktiziert ist.

3. Gelenkvorrichtung mit Kugellager nach Anspruch 1, **dadurch gekennzeichnet, dass** der mindestens eine Schlitz (323) über einen Teil der Länge der flexiblen Spur (2a, 2b) praktiziert ist.

4. Gelenkvorrichtung mit Kugellager nach Anspruch 1, **dadurch gekennzeichnet, dass** eine flexible Spur der mindestens zwei flexiblen Spuren (2a, 2b) eine erste Vielzahl von Schlitzen (323) beinhaltet, welche über die gesamte Länge der flexiblen Spur der mindestens zwei flexiblen Spuren (2a, 2b) praktiziert ist, und eine zweite Vielzahl von Schlitzen (323'), welche über einen Teil der Länge der flexiblen Spur der mindestens zwei flexiblen Spuren (2a, 2b) praktiziert ist.

5. Gelenkvorrichtung mit Kugellager nach einem der vorhergehenden Ansprüche, **dadurch gekennzeichnet, dass** die Balkenabschnitte (325) einen rechteckigen Querschnitt aufweisen.

6. Gelenkvorrichtung mit Kugellager nach einem der Ansprüche 1 bis 4, **dadurch gekennzeichnet, dass** die Balkenabschnitte (325) einen Querschnitt mit einer Form besitzen, welche aus der Gruppe gewählt ist, bestehend aus runder, ovaler, trapezförmiger, quadratischer Form, Rautenform, quatratischer- oder Rautenform mit gerundeten Ecken, Diaboloform.

7. Gelenkvorrichtung mit Kugellager nach einem der vorhergehenden Ansprüche, **dadurch gekennzeichnet, dass** die Schlitze (323, 323') im Wesentlichen parallel zu den seitlichen Rändern einer flexiblen Spur der mindestens zwei flexiblen Spuren (2a, 2b) sind.

8. Gelenkvorrichtung mit Kugellager nach einem der Ansprüche 1 bis 6, **dadurch gekennzeichnet, dass** die Schlitze (323, 323') einen bestimmten Winkel zu den seitlichen Rändern einer flexiblen Spur der mindestens zwei flexiblen Spuren (2a, 2b) aufweisen.

9. Ausklappbares System für einen künstlichen Satelliten, welches mindestens ein erstes ausklappbares Ansatzteil und ein zweites ausklappbares Ansatzteil beinhaltet, **dadurch gekennzeichnet, dass** es zudem eine Gelenkvorrichtung mit Kugellager nach einem der vorhergehenden Ansprüche beinhaltet, wobei die ausklappbaren Ansatzteile an jeder Anordnung, gebildet aus einem Aufrollzylinder (1a, 1b) und einer flexiblen Spur (2a, 2b), befestigt sind.

## Claims

1. Rolling hinge device comprising two substantially parallel winding cylinders (1a, 1b), longitudinal link element-forming winding means (3), the winding means (3) being able to maintain a predetermined distance between the two winding cylinders (1a, 1b) and being wound around the two winding cylinders (1a, 1b), and at least two flexible tracks (2a, 2b), a flexible track (2a, 2b) being fixed to each winding cylinder (1a, 1b), the flexible tracks (2a, 2b) being arranged facing one another and having a point of contact (P), a prestressing force being applied at said point of contact (P) of the flexible tracks (2a, 2b) under the effect of the winding means (3), **characterized in that** at least one flexible track of the at least two flexible tracks (2a, 2b) comprises at least one slot (323, 323') produced over at least a part of its length, said slot delimiting a plurality of flexible beam sections (325) of determined profiles.

2. Rolling hinge device according to claim 1, **characterized in that** said at least one slot (323) is produced over the entire length of the flexible track (2a, 2b).

3. Rolling hinge device according to claim 1, **characterized in that** said at least one slot (323) is produced over a part of the length of the flexible track (2a, 2b).

4. Rolling hinge device according to claim 1, **characterized in that** one flexible track of the at least two flexible tracks (2a, 2b) comprises a first plurality of slots (323) produced over the entire length of the flexible track of the at least two flexible tracks (2a, 2b) and a second plurality of slots (323') produced over a part of the length of the flexible track of the at least two flexible tracks (2a, 2b).

5. Rolling hinge device according to any one of the preceding claims, **characterized in that** said beam sections (325) have a rectangular section.

6. Rolling hinge device according to any one of claims 1 to 4, **characterized in that** said beam sections (325) have a section of a form from the group comprising round, oval, trapezoidal, square, rhomboid, square or rectangular with rounded corners, diabolo forms.

7. Rolling hinge device according to any one of the preceding claims, **characterized in that** the slots (323, 323') are substantially parallel to the lateral edges of one flexible track of the at least two flexible tracks (2a,2b).

8. Rolling hinge device according to any one of claims 1 to 6, **characterized in that** the slots (323, 323') exhibit a determined angle with the lateral edges of one flexible track of the at least two flexible tracks (2a, 2b).

9. Deploying system for man-made satellite, comprising at least one first deployable appendage and one second deployable appendage, **characterized in that** it also comprises a rolling hinge device according to any one of the preceding claims, the deployable appendages being fixed to each assembly formed by a winding cylinder (1a, 1b) and a flexible track (2a, 2b).
